# EUROPÄISCHE PATENTSCHRIFT

(11) **EP 2 228 295 B1**
(45) Veröffentlichungstag und Bekanntmachung des Hinweises auf die Patenterteilung: **15.05.2013**
(21) Anmeldenummer: 10155877.3
(22) Anmeldetag: 09.03.2010
(51) Int. Cl.: B64C 1/20, B64D 9/00

(54) **Rollenbahn**
Roller conveyer
Bande de rouleaux

(30) Priorität: 10.03.2009 DE 102009012426
(43) Veröffentlichungstag der Anmeldung: 15.09.2010
(73) Patentinhaber: Telair International GmbH, 83714 Miesbach (DE)
(72) Erfinder: Huber, Thomas, 83727, Schliersee (DE); Holzner, Richard, 83071, Stephanskirchen (DE)
(74) Vertreter: Bohnenberger, Johannes

(56) Entgegenhaltungen:
- DE-B- 1 060 264
- GB-A- 2 447 116
- US-A- 3 203 527
- US-A- 3 357 372
- US-A- 3 915 275

## Beschreibung

Die Erfindung betrifft eine Rollenbahn nach dem Oberbegriff des Patentanspruches 1.

Aus der EP 1 646 556 B1 und aus der EP 1 646 557 B1 ist ein Frachtdeck zur Aufnahme von Ladung im Frachtraum eines Flugzeugs bekannt, das aus Modulen aufgebaut ist, welche außerhalb des Flugzeugrumpfes montiert und in einem zum großen Teil fertig montierten Zustand in das Flugzeug eingebaut werden können. Diese Bodenmodule müssen sowohl für sich alleine gesehen (bei Montage und Einbau in das Flugzeug) als auch später im Flugzeug eine hohe Stabilität aufweisen.

Einen wesentlichen Anteil an der Stabilität haben Rollenbahnen, welche Querträger der Bodenmodule zusammen mit Bodenpanelen verbinden.

Aus der US 3 915 275, die als nächstliegender Stand der Technik betrochtet wird, A ist eine Rollenbahn bekannt, deren Boden zweifach geknickt ist. Dadurch wird eine erhöhte Stabilität erzielt. Diese genügt jedoch für den Anwendungszweck als Rollenbahn eines Bodenmoduls noch nicht.

Der Erfindung liegt die Aufgabe zu Grunde, eine Rollenbahn der eingangs genannten Art dahin gehend aufzuzeigen, dass eine erhöhte Stabilität der Bodenmodule gewährleistet ist.

Diese Aufgabe wird durch eine Rollenbahn nach Patentanspruch 1 gelöst.

Insbesondere wird die Aufgabe durch eine Rollenbahn mit einem Stabilisationselement bei einem Bodenmodul eines Bodenmoduls eines Flugzeug-Frachtraumbodens gelöst, der eine Ladeebene (X, Y) definiert, wobei das Bodenmodul Querträger aufweist, an denen die Rollenbahn befestigt werden kann, umfassend eine Schiene mit zwei Seitenwangen, zwischen denen Rollen drehbar derart gelagert sind, dass sie über Oberränder der Schiene herausragen, und einen, die Seitenwangen verbindenden Bodenabschnitt, wobei der Bodenabschnitt einen im Querschnitt schräg zur Ladeebene (X, Y) geneigten Knickbereich aufweist, der den Bodenabschnitt in einen höheren und einen niedrigeren relativ zu den Oberrändern liegenden Teilabschnitt unterteilt. Hierbei weist die Schiene einen Außenflansch auf, an welchem das zur Ladeebene schräg verlaufende Stabilisationselement befestigt ist. In diesem Fall ist also die Rollenbahn bzw. die Schiene am Rand des Bodenmoduls montiert. Dieses Stabilisationselement verleiht somit der Rollenbahn eine erhöhte Steifigkeit, was die Bodenmodule wiederum "fester" macht.

Wenn die Rollenbahn am Rand des Bodenmoduls montiert ist, so ist es von Vorteil, wenn das Stabilisationselement eine mit einem Anschlagbereich versehene Stabilisationsleiste umfasst, die relativ zur Ladeebene mindestens abschnittsweise höher ist als die Oberränder der Schiene. Einerseits wird dadurch wiederum eine Erhöhung der Biegesteifigkeit erzielt, andererseits wird gleichzeitig ein Anschlag für auf der Rollenbahn verschobene Lasten (Container) erzielt. Es werden also hier gleich "zwei Fliegen mit einer Klappe geschlagen".

Das Stabilisationselement kann weiterhin ein gebogenes Blechelement umfassen, welches mit der Schiene fest verbunden ist. Ein solches Blechelement weist ein geringes Gewicht auf, erhöht jedoch die Biegesteifigkeit der Schiene zusätzlich. Darüber hinaus wird auch gleichzeitig eine Abdeckung der Randbereiche zwischen den Bodenmodulen und dem Flugzeugrumpf sichergestellt, so dass auch hier wieder eine Mehrfunktionalität gewährleistet ist.

Die Schiene wird vorzugsweise als Strangpressprofil, insbesondere aus Aluminium gefertigt. Dies ist kostengünstig.

Die Anschlagleiste wiederum ist vorzugsweise aus faserverstärktem Kunststoff gefertigt. Dadurch wird bei relativ niedrigem Gewicht einerseits eine hohe Festigkeit erzielt, andererseits ist auch eine hinreichend hohe Verschleißfestigkeit gegeben, welche für einen derartigen Anschlag sinnvoll ist. Schließlich weisen derartige Materialien auch relativ niedrige Reibungskoeffizienten auf, wie dies vorteilhaft ist, wenn ein Container im Laderaum unter Anschlag an der Anschlagleiste verschoben wird.

Nachfolgend wird die Erfindung anhand eines Ausführungsbeispiels näher erläutert, das in den beiliegenden Zeichnungen gezeigt ist. Hierbei zeigen
- - Fig. 1: Einen Querschnitt durch eine Rollenbahn mit Stabilisationselement gemäß einer Ausführungsform der Erfindung,
- - Fig. 2: eine perspektivische Darstellung eines Flugzeugrumpf-Abschnittes mit einem Bodenmodul und
- - Fig. 3: eine Teil-Draufsicht auf ein Bodenmodul mit dazu gehörigem Rumpf-Abschnitt.

In der nachfolgenden Beschreibung werden für gleiche und gleich wirkende Teile dieselben Bezugsziffern verwendet.

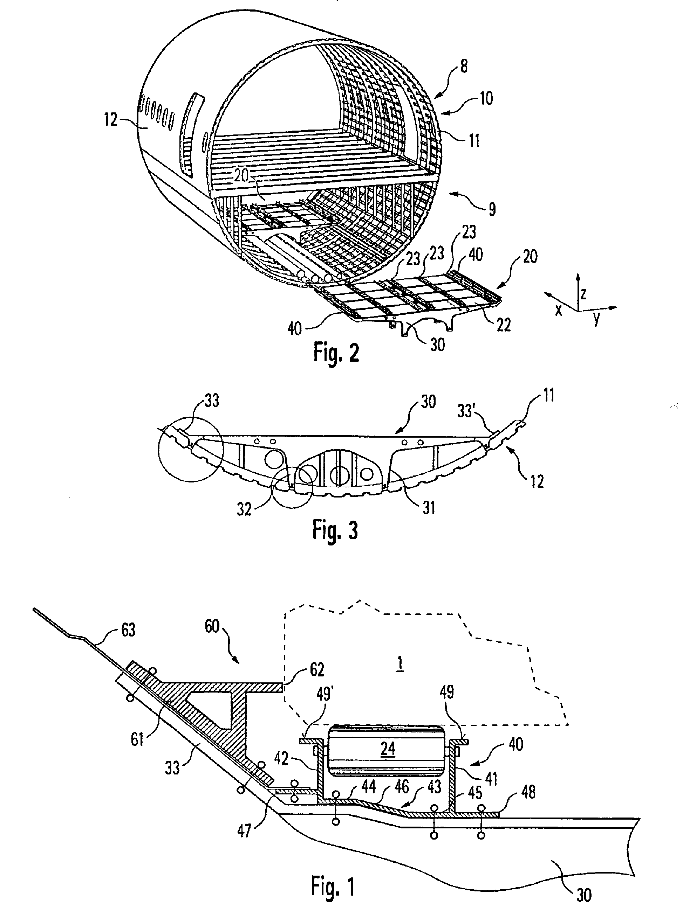

In Fig. 2 ist ein Teil eines Flugzeugrumpfes mit einem Bodenmodul gezeigt, wie dies aus der EP 1 646 556 B1 bekannt ist. Ein solches Bodenmodul 20 weist Querträger 30 auf, welche über Rollenbahnen 23 sowie randseitige Rollenbahnen bzw. Schienen 40 miteinander verbunden sind. Es sind weiterhin Bodenpaneele 22 vorgesehen, die zwischen den Rollenbahnen 23 bzw. 40 und den Querträgern 30 montiert sind, so dass eine begehbare Fläche entsteht. Die Paneele 22 bzw. die Oberfläche des Bodenmoduls 20 bildet eine Ladeebene in X-Y-Richtung, wie dies in Fig. 2 mit einem Koordinatensystem angedeutet ist. Derartige Bodenmodule 20 können außerhalb eines Flugzeugrumpfes 10 montiert werden, der einen oberen Abschnitt 8 und einen unteren Abschnitt 9 aufweist, in welchem ein Frachtraum gebildet ist.

Die Bodenmodule 20 werden mit Endabschnitten der Querträger 30 an Spanten 11 befestigt, wie dies in den Fig. 2 und 3 gezeigt ist. Endabschnitte 33, 33' der Querträger 30 werden ebenfalls an den Spanten 11 bzw. an einer Außenhaut 12 des Rumpfes 10 befestigt, wenn das Bodenmodul 30 nach seiner (außerhalb des Flugzeugrumpfes stattfindenden) Montage in den Flugzeugrumpf eingebaut wird.

Wie in Fig. 1 dargestellt, ist die Schiene 40, welche eine randseitige Rollenbahn bildet, derart aufgebaut, dass zwischen Seitenwangen 41, 42, die sich in X-Z-Richtung erstrecken, Rollen 24 derart drehbeweglich gelagert sind, dass ihr Außenumfang über Oberränder 49, 49' der Schiene 40 hervorstehen.

Die Seitenwangen 41, 42 sind durch einen Bodenabschnitt 43 miteinander verbunden, der einen Knickbereich 46 aufweist. Der Knickbereich 46 verbindet einen höheren Teilabschnitt 44 mit einem niedrigeren Teilabschnitt 45 (relativ zu den Oberrändern 49, 49' bzw. zur Ladeebene X-Y gesehen), so dass dieser Knickbereich 46 in Fig. 1 von links oben nach rechts unten verläuft. Durch diesen Knickbereich erhält die Schiene 40 eine erhöhte Stabilität in Längsrichtung.

Die Schiene 40 ist weiterhin mit einem Innenflansch 48 versehen, der zur Auflage und Befestigung der Bodenpaneele 22 dient.

An einem Außenflansch 47 der Schiene 40 ist ein Blechelement 63 fest angebracht, das ebenfalls von links oben nach rechts unten geneigt verläuft.

Die Schiene 40 ist an mehreren Stellen, die in Fig. 1 durch Linien mit verdickten Endpunkten schematisiert dargestellt sind, mit dem Querträger 30 verbunden. Dies sind vorzugsweise Schraub- oder Nietverbindungen. Derartige Verbindungen fixieren auch das Blech 63 am Außenflansch 47 der Schiene 40 und verbinden das Blech 63 mit dem Endabschnitt 33 des Querträgers 30.

Weiter ist eine Stabilisationsleiste 61 vorgesehen, die als Kunststoff-Hohlprofil ausgebildet ist und zusammen mit dem Blech 63 mit dem Endabschnitt 33 des Querträgers 30 verbunden ist. Somit bildet diese Stabilisationsleiste 61 zusammen mit dem Blechelement 63 und der Verbindung mit dem Außenflansch 47 zur Schiene 40 ein weiteres Stabilisationselement 60 für die Schiene 40 bzw. für das gesamte Bodenmodul 20.

Die Stabilisationsleiste 61 weist einen Anschlagbereich 62 auf, der oberhalb der Oberränder 49, 49' der Schiene 40 liegt. Dadurch können Container 1, welche auf den Rollen 24 verschoben werden, mit ihrem Außenrand am Anschlagbereich 62 entlang gleitend verschoben werden. An dieser Stelle sei bemerkt, dass der Container 1 lediglich schematisiert dargestellt ist, seine übliche spezielle Konstruktion mit einem umlaufenden Außenflansch ist nicht dargestellt.

Aus Obigem geht hervor, dass mit der vorliegenden Erfindung durch eine Kombination von Einzelbauelementen und deren spezieller Konstruktion ein besonders biegesteifes Bodenmodul 20 geschaffen wird.

### Bezugszeichen

- 8: oberer Abschnitt
- 9: unter Abschnitt
- 10: Flugzeugrumpf
- 11: Spanten
- 12: Außenhaut
- 20: Bodenmodul
- 22: Bodenpaneel
- 23: Rollenbahn
- 24: Rolle
- 30: Querträger
- 31: Stütze
- 32: Stütze
- 33, 33': Endabschnitt
- 40: Schiene
- 41: Seitenwange
- 42: Seitenwange
- 43: Bodenabschnitt
- 44: höherer Teilabschnitt
- 45: niedrigerer Teilabschnitt
- 46: Knickbereich
- 47: Außenflansch
- 48: Innenflansch
- 49, 49': Oberrand
- 60: Stabilisationselement
- 61: Stabilisationsleiste
- 62: Anschlagbereich
- 63: Blechelement

## Patentansprüche

1. Rollenbahn mit einem Stabilisationselement (60) bei einem Bodenmodul (20) eines Flugzeug-Frachtraumbodens, der eine Ladeebene (X, Y) definiert, wobei das Bodenmodul (20) Querträger (30) aufweist, an denen die Rollenbahn befestigt werden kann, umfassend
eine Schiene (40) mit zwei Seitenwangen (41, 42), zwischen denen Rollen (24) drehbar derart gelagert sind, dass sie über Oberränder (49, 49') der Schiene (40) hinausragen, und einen, die Seitenwangen (41, 42) verbindenden Bodenabschnitt (43), wobei der Bodenabschnitt (43) einen im Querschnitt schräg zur Ladeebene (X, Y) geneigten Knickbereich (46) aufweist, der den Bodenabschnitt (43) in einen höheren (44) und einen niedrigeren (44') relativ zu den Oberrändern (49, 49') liegenden Teilabschnitt (45) unterteilt,
**dadurch gekennzeichnet, dass**
die Schiene (40) einen Außenflansch (47) aufweist, an welchem das zur Ladeebene (X, Y) schräg verlaufende Stabilisationselement (60) befestigt ist.

2. Rollenbahn nach einem der vorhergehenden Ansprüche, insbesondere nach Anspruch 1,
**dadurch gekennzeichnet, dass**
das Stabilisationselement (60) eine mit einem Anschlagbereich (62) versehene Stabilisationsleiste (61) umfasst, die relativ zur Ladeebene (X, Y) mindestens abschnittsweise höher als die Oberränder (49, 49') der Schiene (40) angeordnet ist.

3. Rollenbahn nach einem der vorhergehenden Ansprüche,
**dadurch gekennzeichnet, dass**
das Stabilisationselement (60) ein gebogenes Blechelement (63) umfasst, welches mit der Schiene (40) fest verbunden ist.

4. Rollenbahn nach einem der vorhergehenden Ansprüche,
**dadurch gekennzeichnet, dass**
die Schiene (40) als Strangpressprofil, insbesondere aus Aluminium gefertigt ist.

5. Rollenbahn nach Anspruch 2,
**dadurch gekennzeichnet, dass**
die Stabilisationsleiste (61) aus einem faserverstärkten Kunststoff gefertigt ist.

## Claims

1. Roller conveyor having a stabilisation element (60) in a floor module (20) of an aircraft cargo hold floor that defines a loading plane (X, Y), the floor module (20) having cross-members (30) to which the roller conveyor can be attached, comprising
a rail (40) having two side-pieces (41, 42) between which rollers (24) are rotatably mounted in such a way that they protrude above upper edges (49, 49') of the rail (40), and a base portion (43) which connects the side-pieces (41, 42), the base portion (43) having an angled bend region (46) which in cross-section is inclined at an angle with respect to the loading plane (X, Y) and which divides the base portion (43) into a sub-portion (44) which is located at a higher level and a sub-portion (45) which is located at a lower level, relative to the upper edges (49, 49'),
**characterised in that**
the rail (40) has an outer flange (47) to which the stabilisation element (60), which runs at an angle with respect to the loading plane (X, Y), is attached.

2. Roller conveyor according to any one of the preceding claims, especially according to claim 1,
**characterised in that**
the stabilisation element (60) comprises a stabilisation bar (61), which is provided with a stop region (62) and which is in at least some regions arranged to be higher than the upper edges (49, 49') of the rail (40), relative to the loading plane (X, Y).

3. Roller conveyor according to either one of the preceding claims,
**characterised in that**
the stabilisation element (60) comprises a bent sheet metal element (63) which is rigidly attached to the rail (40).

4. Roller conveyor according to any one of the preceding claims,
**characterised in that**
the rail (40) is produced in the form of an extruded profile, especially of aluminium.

5. Roller conveyor according to claim 2,
**characterised in that**
the stabilisation bar (61) is produced from a fibre-reinforced plastics material.

## Revendications

1. Convoyeur à rouleaux avec un élément de stabilisation (60) pour un module de plancher (20) d'un plancher de soute d'avion, qui définit un plan de chargement (X, Y), le module de plancher (20) présentant des traverses (30) au niveau desquelles le convoyeur à rouleaux peut être fixé, comprenant
un rail (40) avec deux jambages latéraux (41, 42), entre lesquels des rouleaux (24) sont logés rotatifs de manière à dépasser des bords supérieurs (49, 49') du rail (40), et une section de plancher (43) reliant les jambages latéraux (41, 42), la section de plancher (43) présentant un secteur coudé (46), incliné diagonalement par rapport au plan de chargement (X, Y) en coupe transversale, qui divise la section de plancher (43) en une section partielle (45) se trouvant plus haut (44) et une section partielle (45) se trouvant plus bas (44') par rapport aux bords supérieurs (49, 49'),
**caractérisé en ce que**
le rail (40) présente un rebord extérieur (47), au niveau duquel est fixé l'élément de stabilisation (60) s'étendant diagonalement par rapport au plan de changement (X, Y).

2. Convoyeur à rouleaux selon l'une quelconque des revendications précédentes, en particulier selon la revendication 1,
**caractérisé en ce que**
l'élément de stabilisation (60) comprend une barre de stabilisation (61), munie d'un secteur formant butée (62), qui est agencée plus haut que les bords supérieurs (49, 49') du rail (40) au moins par sections par rapport au plan de chargement (X, Y).

3. Convoyeur à rouleaux selon l'une quelconque des revendications précédentes,
**caractérisé en ce que**
l'élément de stabilisation (60) comprend un élément en tôle (63) coudé, qui est relié fixe au rail (40).

4. Convoyeur à rouleaux selon l'une quelconque des revendications précédentes,
**caractérisé en ce que**
le rail (40) est réalisé en tant que profilé de presse à filer, en particulier en aluminium.

5. Convoyeur à rouleaux selon la revendication 2,
**caractérisé en ce que**
la barre de stabilisation (61) est réalisée en une matière plastique renforcée par des fibres.
